# EUROPÄISCHE PATENTANMELDUNG

(11) **EP 1 108 509 A2**
(43) Veröffentlichungstag der Anmeldung: **20.06.2001**
(21) Anmeldenummer: 00113738.9
(22) Anmeldetag: 29.06.2000
(51) Int. Cl.: B29B 9/06

(54) **Extrusionsvorrichtung und Verfahren zum Extrudieren von Kunststoffmaterial**

(30) Priorität: 20.10.1999 DE 19932303
(71) Anmelder: Battenfeld Extrusionstechnik GmbH, 32547 Bad Oeynhausen (DE)
(72) Erfinder: Dröge, Berthold, 32547 Bad Oeynhausen (DE); Roth, Michael, 33602 Bielefeld (DE)

(57) **Zusammenfassung**

Die Erfindung betrifft eine Extrusionsvorrichtung zum Extrudieren von Kunststoffmaterial, die aufweist: eine Extrusionseinheit(1), bestehend aus einer Schnecke (2), die in einem Schneckenzylinder (3) rotierbar angeordnet ist, wobei die Schnecke (2) Schneckengänge (4) aufweist, und eine Ausbringeinheit (5), durch die von der Extrusionseinheit (1) gefördertes Kunststoffmaterial extrudiert wird. Um insbesondere die Zerstükkelung des Kunststoffstranges für Kalanderanwendungen ohne thermische Belastung des Materials zu bewerkstelligen, ist vorgesehen, daß die Ausbringeinheit (5) Schneidmittel (6) aufweist, die so angeordnet sind, daß das von der Schnecke (2) gefördertes Kunststoffmaterial von den Schneckengängen (4) in den Wirkbereich der Schneidmittel (6) gefördert wird.

## Beschreibung

Die Erfindung betrifft eine Extrusionsvorrichtung zum Extrudieren von Kunststoffmaterial, die aufweist:
- eine Extrusionseinheit, vorzugsweise eine Plastifiziereinheit, bestehend aus einer Schnecke, die in einem Schneckenzylinder rotierbar angeordnet ist, wobei die Schnecke zur Förderung von Kunststoffmaterial Schneckengänge aufweist, und
- eine Ausbringeinheit, durch die von der Extrusionseinheit gefördertes Kunststoffmaterial extrudiert wird.

Des weiteren betrifft die Erfindung ein Verfahren zum Extrudieren von Kunststoffmaterial.

Extrusionsvorrichtungen der gattungsgemäßen Art sind bekannt. Sie werden üblicherweise für die Plastifizierung und/oder zum Austrag von Kunststoff-Formmassen eingesetzt. Das zu verarbeitende Material wird in unterschiedlichen Mischungen und Formen zugegeben, wie z.B. Pulver, Granulat, Mahlgut, Folienstreifen, Teppichreste usw.

Im Extruder durchläuft das Material mehrere Prozeßschritte wie z. B. Einziehen, Vorwärmen, Plastifizieren, Mischen, Entgasen und Austragen. Daneben ist eine Reihe weiterer Prozeßschritte bekannt, die im Bedarfsfall durch spezielle Gestaltung des Extruders realisiert werden.

Alle wirtschaftlich relevanten Anwendungen beinhalten den Verfahrensschritt des Austragens. Je nach Anwendungsbereich werden unterschiedliche Ansprüche an die Formgebung der Kunststoffmasse gestellt. Manche Formgebungsschritte erfordern einen hohen Formgebungsdruck, andere laufen auf niedrigem Niveau ab. Dementsprechend werden die Extruder in ihrem Eigenschaftsprofil eingesetzt.

Mit dem Druckaufbau muß eine gewisse Energiemenge in das Material eingeleitet werden. Je nach prinzipbedingtem Wirkungsgrad der Maschine erwärmt sich dabei das Material mehr oder weniger stark. Bei besonders empfindlichen Materialien kann es zu derartigen Temperaturerhöhung kommen, daß damit negative Einflüsse auf das Produkt oder die Weiterverarbeitung verbundenen sind. Ein diesbezüglich besonders empfindlicher Prozeß ist die Kalanderbeschickung.

Zur Kalanderbeschickung werden oftmals Planetwalzenextruder eingesetzt. Da dieses Extruderprinzip Schwächen hinsichtlich des Druckaufbaus bzw. bei der Entgasung der Formmassen zeigt, werden diese Extruder meist mit einer weiteren Extruderbauart kombiniert.

Es ist beim Einsatz eines Planetwalzenextruders bekannt, die Hauptspindel des Planetwalzenextruders durch eine Einschnecke zu verlängern, wie dies beispielsweise in "Kunststoffextrusionstechnik I, Grundlagen", Carl Hanser Verlag, 1993, Seite 285, beschrieben ist.

Damit sind die Funktionen Druckaufbau und Entgasung realisierbar, jedoch hat sich diese Extruderbauart wegen fehlender separater Drehzahleinstellbarkeit der Einschnecke nicht durchgesetzt.

Planetwalzenextruder mit nachgeschaltetem Einschneckenextruder in Tandembauweise ermöglichen eine Beeinflussung aller Prozeßparameter. Bei besonders empfindlichen Formmassen reicht jedoch bereits der für das Passieren der Austragsstufe notwendige Druck einer großen Vollstrangdüse aus, um die Massetemperatur auf ein unerwünschtes Niveau anzuheben. Der austretende Vollstrang muß dann je nach Art der Kalanderbeschickung weiterhin durch eine separate, angetriebene Schneidvorrichtung in die gewünschten Teile zur Erzeugung der benötigen Teilchengröße zerkleinert werden.

Dabei wird oft beobachtet, daß nachteilhafterweise die aus runden oder ovalen Vollstrangdüsen abgeschnittenen Teile im plastischen Zustand auf dem Förderband abrollen und dann aneinander kleben. Materialanhäufungen dieser Art sind unerwünscht und stören den Kalanderprozeß erheblich.

Der Erfindung liegt daher die **Aufgabe** zugrunde, eine Extrusionsvorrichtung der gattungsgemäßen Art derart weiterzuentwickeln, daß die Funktionen Plastifizieren, Ausformen, Entgasen, Austragen und Trennen bei geringstem Druck- und Temperaturaufbau erfolgen können. Es soll des weiteren erreicht werden, daß der für die Kalanderbeschikkung erforderliche Kunststoffstrom reproduzierbar und ohne Verklebungen abgeschnittener Teile erfolgen kann. Die hierfür zu schaffende Vorrichtung soll einfach aufgebaut und damit kostengünstig sein.

Die **Lösung** dieser Aufgabe durch die Erfindung ist dadurch gekennzeichnet, daß die Ausbringeinheit (5) Schneidmittel (6) aufweist, die so angeordnet sind, daß das von der Schnecke (2) geförderte Kunststoffmaterial von den Schneckengängen (4) in den Wirkbereich der Schneidmittel (6) gefördert wird.

Damit ist durch den weitgehend offenen Austrag-Querschnitt am Ende der Schnecke die Druckdifferenz für die Überwindung der Ausbringeinheit (der "Druckverbrauch") derart gering, daß praktisch keine nennenswerte Temperaturerhöhung durch die Austragung der Kunststoffmasse erfolgt. Das Material wird damit äußerst schonend ausgetragen. Der Füllgrad der Schnecke ist trotzdem noch hoch genug, um eine saubere Abdichtung zu einem stromaufwärts gelegenen Entgasungsabschnitt zu sichern.

Vorteilhafterweise ist die Ausbringeinheit (5) in unmittelbarer Nähe des Austragendes der Extrusionseinheit (1) angeordnet. Es kann aber auch vorgesehen sein, daß die Ausbringeinheit (5) von der Extrusionseinheit (1), z.B. mittels eines Abstandsringes, beabstandet angeordnet ist. Weiterhin kann fortbildungsgemäß vorgesehen werden, daß die Ausbringeinheit (5) der Kontur der Extrusionseinheit (1) angepaßt ist; d. h. daß die Ausbringeinheit (5) eine kreisförmige oder ringförmige Ausbringöfffnung (7) aufweisen kann.

Insbesondere ist daran gedacht, daß die Schneidmittel (6) als mindestens ein Messer ausgeführt sind. Bevorzugt sind die Schneidmittel (6) am Umfang der Ausbringöffnung (7) angeordnet. Hierbei ist es besonders vorteilhaft, daß mehrere Schneidmittel (6) an bzw. in der Ausbringeinheit (5) angeordnet sind, wobei die Schneidmittel (6) verstellbar an der Ausbringeinheit (5) angeordnet sein können. Zur Feinjustierung des Schneideffekts ist vorteilhafterweise vorgesehen, daß die Schneidmittel in bezug auf die Ausbringöffnung (7) radial verstellbar angeordnet sind.

Weiterbildungsgemäß ist vorgesehen, daß Mittel, namentlich ein elektrischer Motor samt entsprechenden Antriebselementen, zum Bewegen der Ausbringeinheit (5) relativ zum Schneckenzylinder (3) vorgesehen sind. Dabei ist insbesondere an eine koaxiale Drehung der Ausbringeinheit (5) bei feststehendem Schneckenzylinder 83) gedacht. Die Rotation kann sowohl mit als auch gegen die Drehrichtung der Schnecke (3) erfolgen. Hierdurch wird die Größe der Teile in der Weise beeinflußt, daß bei mitlaufender Drehrichtung die Teile größer und bei gegenlaufender Drehrichtung die Teil kleiner werden.

Als eine weitere Fortbildung ist vorgesehen, zwischen der Ausbringeinheit (5) und den angrenzenden Schneckenteilen ein Zwischenstück vorzusehen, daß beispielsweise mit Stiften versehen ist oder im Druchmesser zur Schnecke unterschiedlich ausgeführt ist. Hierdurch wird ebenfalls die Größe der Teile beeinflußt, da der Druck und somit das Förderverhalten verändert wird.

Das Verfahren zum Extrudieren von Kunststoffmaterial weist die Schritte auf:
- Rotieren lassen einer Schnecke (2) in einem Schneckenzylinder (3), wobei Schnecke (2) und Schneckenzylinder (3) eine Extrusionseinheit (1) darstellen, und Fördern von Kunststoffmaterial mittels auf der Schnecke (2) angeordneten Schneckengängen (4),
- Ausbringen des von der Extrusionseinheit (1) Kunststoffmaterials durch Extrudieren des Materials durch eine Ausbringeinheit (5).
   Erfindungsgemäß ist bei einem solchen vorbekannten Verfahren vorgesehen, daß das Verfahren weiterhin den Verfahrensschritt aufweist:
- Fördern des Kunststoffmaterials durch die Schneckengänge (4) der Schnecke (2) in den Wirkbereich von Schneidmitteln (6), insbesondere Messern, die in der Ausbringeinheit (5) angeordnet sind.

Mit dieser Vorgehensweise wird analog zur beschriebenen Vorrichtung sichergestellt, daß ein hinsichtlich der thermischen Belastung materialschonendes Austreiben der Kunststoffschmelze durch die Ausbringeinheit bewerkstelligt werden kann und die Teilung des Kunststoffs in einzelne Materialteile reproduzierbar und einfach erfolgt.

Bei Versuchen, die mit der beschriebenen Vorrichtung bzw. mit dem genannten Verfahren durchgeführt wurden, hat sich überraschenderweise gezeigt, daß die Massetemperatur durch die Drehzahl der Austragsschnecke kaum beeinflußt wird. Da die Schneckendrehzahl die Schnittfrequenz beeinflußt, ist weiterhin die Teilchengröße in gewissen Grenzen durch die Schneckendrehzahl steuerbar. Weiterhin hat sich überraschenderweise gezeigt, daß der geringe Gegendruck am Schneckenende das Förderverhalten und seine Regelbarkeit positiv beeinflußt.

Die an sich bekannten Wechselwirkungen zwischen Temperatureinstellungen von Zylinder und Schnecke einerseits und dem Förderverhalten der Schnecke andererseits sind auch bei der beschriebenen Vorrichtung gegeben und im allgemeinen besonders empfindlich. Es kann nunmehr jedoch eine Bandbreite für die Prozeßparameter gesteuert eingehalten werden, die bislang als nicht bzw. nur schwer realisierbar erschien.

Schließlich zeigte sich, daß die aus der erfindungsgemäßen Vorrichtung austretenden Teilchen eine Form haben, die auf einem Förderband zum Kalanderknet geringe oder gar keine Rollneigung zeigen. Dies stellt einen wichtigen Beitrag zur Prozeßsicherheit dar.

In den Zeichnungen ist ein Ausführungsbeispiel der Erfindung dargestellt.
- Fig. 1: zeigt schematisch den Längsschnitt durch eine Extrusionseinheit, in
- Fig. 2: ist die Seitenansicht der Vorrichtung dargestellt.

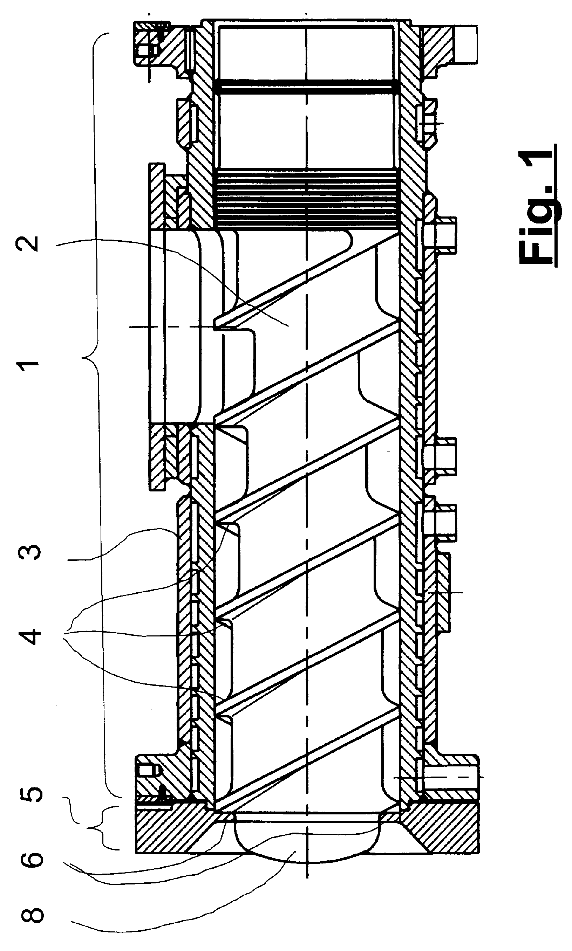

In Figur 1 ist schematisch eine Extrusionseinheit 1 dargestellt, die einen Schneckenzylinder (Austragszylinder) 3 mit einer darin rotierbar angeordneten Schnecke (Austragsschnecke) 2 aufweist. Die Schnecke 2 hat in bekannter Weise Schneckengänge 4, die bei Rotation der Schnecke bewirken, daß - nicht dargestelltes - Kunststoffmaterial plastifiziert wird.

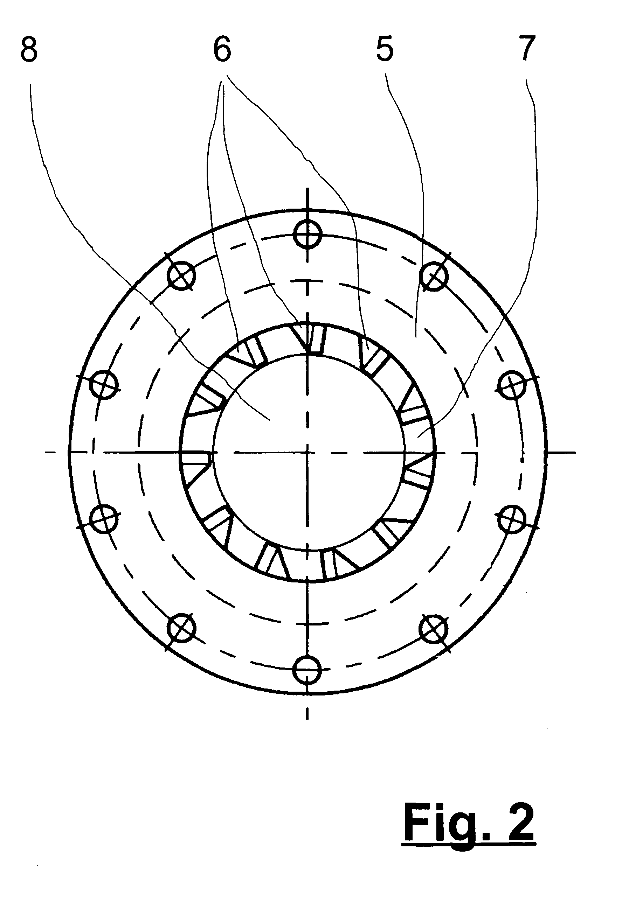

Wie gut in Fig. 1 zu erkennen ist, ist das Ende des Schneckenzylinders 3 mit einer Zylinderspitze 8 versehen. Dadurch ergibt sich - im Zusammenwirken mit der am Ende des Schneckenzylinder 3 angeordneten Ausbringeinheit 5 - eine ringförmige Ausbringöffnung 7 (s. Fig. 2) am Schneckenende, durch die das plastifizierte Kunststoffmaterial gepreßt wird. Allerdings ist hierzu kein hoher Druck erforderlich, so daß das Material ohne nennenswerte Erhitzung den Austrittsspalt passiert.

Wie am besten in Fig. 2 zu erkennen ist, weist die Ausbringeinheit 5 eine Reihe von Messern (Schneidmittel) 6 auf. Die Schneckengänge 4 fördern das plastifizierte Kunststoffmaterial über die Ausbringöffnung 7 zu den Messern 6, so daß definierte Kunststoffstrangstücke abgeschnitten werden und zu einem - nicht dargestellten - Kalander gefördert werden.

Das Kunststoffmaterial wird dadurch also zwangsläufig durch die Durchtrittsfläche 7 der Ausbringeinheit 5 gepreßt, in die die Messer 6 hineinragen. Dabei streifen die sich relativ zur Einheit 5 drehenden Schneckengänge 4 das Material an den feststehenden Messern 6 ab und erzeugen somit gleichmäßige Teilchen.

Wie aus den Figuren nicht näher zu erkennen ist, sind die Messer 6 verstellbar angeordnet. Dadurch wird erreicht, daß die zu erzeugende Teilchenform einstellbar ist. Da die Messer 6 radial verschieblich ausgeführt sind, können sie in die Ausbringöffnung 7 ein- bzw. ausgeschoben werden. Hierüber kann der Querschnitt des Materialstranges gesteuert werden.

### Bezugszeichenliste:

- 1: Extrusionseinheit
- 2: Schnecke
- 3: Schneckenzylinder
- 4: Schneckengänge
- 5: Ausbringeinheit
- 6: Schneidmittel
- 7: Ausbringöffnung
- 8: Zylinderspitze

## Patentansprüche

1. Extrusionsvorrichtung zum Extrudieren von Kunststoffmaterial, die aufweist:
- eine Extrusionseinheit (1), vorzugsweise eine Plastifiziereinheit, bestehend aus einer Schnecke (2), die in einem Schneckenzylinder (3) rotierbar angeordnet ist, wobei die Schnecke (2) Schneckengänge (4) aufweist, und
- eine Ausbringeinheit (5), durch die von der Extrusionseinheit (1) gefördertes Kunststoffmaterial extrudiert wird,
**dadurch gekennzeichnet, daß**
die Ausbringeinheit (5) Schneidmittel (6) aufweist, die so angeordnet sind, daß das von der Schnecke (2) geförderte Kunststoffmaterial von den Schneckengängen (4) in den Wirkbereich der Schneidmittel (6) gefördert wird.

2. Vorrichtung nach Anspruch 1, dadurch gekennzeichnet, daß die Ausbringeinheit (5) in unmittelbarer Nähe des Austragendes der Extrusionseinheit (1) angeordnet ist.

3. Vorrichtung nach Anspruch 1 oder 2, dadurch gekennzeichnet, daß die Ausbringeinheit (5) eine kreisförmige oder ringförmige Ausbringöffnung (7) aufweist.

4. Vorrichtung nach einem der Ansprüche 1 bis 3, dadurch gekennzeichnet, daß die Schneidmittel (6) als mindestens ein Messer ausgeführt sind.

5. Vorrichtung nach einem der Ansprüche 1 bis 4, dadurch gekennzeichnet, daß die Schneidmittel (6) am Umfang der Ausbringöffnung (7) angeordnet sind.

6. Vorrichtung nach einem der Ansprüche 1 bis 5, dadurch gekennzeichnet, daß mehrere Schneidmittel (6) an bzw. in der Ausbringeinheit (5) angeordnet sind.

7. Vorrichtung nach einem der Ansprüche 1 bis 6, dadurch gekennzeichnet, daß die Schneidmittel (6) verstellbar an der Ausbringeinheit (5) angeordnet sind.

8. Vorrichtung nach Anspruch 7, dadurch gekennzeichnet, daß die Schneidmittel in bezug auf die Ausbringöffnung (7) radial verstellbar angeordnet sind.

9. Vorrichtung nach einem der Ansprüche 1 bis 8, gekennzeichnet durch Mittel zum Bewegen der Ausbringeinheit (5) relativ zum Schneckenzylinder (3).

10. Vorrichtung nach Anspruch 9, dadurch gekennzeichnet, daß die Mittel zum Bewegen zum koaxialen Drehen der Ausbringeinheit (5) relativ zum Schneckenzylinder (3) geeignet sind.

11. Vorrichtung nach Anspruch 9 oder 10, dadurch gekennzeichnet, daß die Mittel zum Bewegen zum Drehen der Ausbringeinheit (5) bei feststehendem Schneckenzylinder (3) geeignet ist.

12. Verfahren zum Extrudieren von Kunststoffmaterial, das die Schritte aufweist:
- Rotieren lassen einer Schnecke (2) in einem Schneckenzylinder (3), wobei Schnecke (2) und Schneckenzylinder (3) eine Extrusionseinheit (1) darstellen, und Fördern von Kunststoffmaterial mittels auf der Schnecke (2) angeordneten Schneckengängen (4),
- Ausbringen des von der Extrusionseinheit (1) geförderten Kunststoffmaterials durch Extrudieren des Materials durch eine Ausbringeinheit (5),
**dadurch gekennzeichnet, daß**
das Verfahren weiterhin den Verfahrensschritt aufweist:
- Fördern des Kunststoffmaterials durch die Schneckengänge (4) der Schnecke (2) in den Wirkbereich von Schneidmitteln (6), insbesondere Messern, die in der Ausbringeinheit (5) angeordnet sind.
